# FASCICULE DE BREVET EUROPEEN

(11) **EP 1 545 279 B1**
(45) Date de publication et mention de la délivrance du brevet: **21.06.2006**
(21) Numéro de dépôt: 03787563.0
(22) Date de dépôt: 13.08.2003
(51) Int. Cl.: A47J 37/07

(54) **BARBECUE PLIABLE**
KLAPPBARES BARBECUE
FOLDING BARBECUE

(30) Priorité: 16.08.2002 EP 02405700
(43) Date de publication de la demande: 29.06.2005
(73) Titulaire: Osowiecky, Walery, 2000 Neuchâtel (CH)
(72) Inventeur: Osowiecky, Walery, 2000 Neuchâtel (CH)
(74) Mandataire: GLN
(86) Numéro de dépôt international: PCT/CH2003/000545
(87) Numéro de publication internationale: WO 2004/016140

(56) Documents cités:
- EP-A- 0 857 448
- FR-A- 2 619 298
- US-A- 5 103 799
- US-A- 6 131 560

## Description

La présente invention se rapporte aux appareils de cuisson à l'air libre, fonctionnant notamment au charbon de bois ou au gaz, pour griller la viande ou le poisson, communément désignés par le terme anglais de barbecue.

Les barbecues actuellement proposés sur le marché servent essentiellement dans le jardin, à proximité de la maison. Ils sont conçus pour procurer un maximum de confort d'utilisation et sont donc généralement de grandes dimensions, ce qui les rend peu aisément transportables.

L'invention concerne, plus particulièrement, un barbecue de type pliable, donc peu encombrant, conçu pour une utilisation en pleine nature ou, en intérieur, sur les braises d'une cheminée.

Le brevet US 4 334 516 décrit un barbecue pliable dont les pieds sont montés articulés sur un cadre supportant une grille indépendante. Certes, la structure prend peu de place dans l'équipement d'un campeur ou d'un randonneur, mais elle ne permet ni d'adapter la dimension de la grille aux besoins, ni d'ajuster sa hauteur, ni de l'installer sur un sol irrégulier. De plus, la présence d'articulations n'est pas de nature à alléger son coût de fabrication.

Un autre barbecue pliable est décrit dans US 6131560.

La présente invention a justement pour but de fournir un barbecue exempt de ces inconvénients.

Pour atteindre ce but, le barbecue selon l'invention comporte essentiellement:
- une grille de cuisson comprenant un cadre rectangulaire à l'intérieur duquel est disposé un réseau de barres parallèles à ses deux premiers côtés et dont les deux deuxièmes côtés se prolongent, à chaque extrémité, par une partie inclinée vers le bas par rapport au plan de la grille, les deux parties inclinées de chaque extrémité de la grille étant réunies par une barre parallèle à un premier côté du cadre, lesquels sont eux-mêmes reliés par deux barrettes parallèles auxdites parties inclinées et respectivement disposées à proximité de chacune, et
- deux pieds liés à ladite grille et constitués chacun d'un cadre rectangulaire dont un côté est destiné à reposer sur le sol et dont deux autres côtés opposés traversent respectivement les fenêtres que délimitent, à chaque extrémité de la grille, lesdites parties inclinées et lesdites barrettes, ces côtés étant profilés de manière à former des marches d'escalier.

De manière particulièrement avantageuse, la grille est réalisée en deux demi-grilles liées chacune à l'un des pieds et pouvant être assemblées en se recouvrant plus ou moins, de manière à offrir une surface de cuisson ajustable à volonté. A cet effet, les deuxièmes côtés de l'une des demi-grilles se terminent par deux crochets dimensionnés et conformés pour se fixer sur n'importe quelle barre de l'autre demi-grille.

Selon un mode de réalisation préféré, les barres de la grille présentent des ondulations en phase formant une pluralité de rigoles qui servent à maintenir en place, lors de la cuisson, les aliments ayant tendance à rouler de manière incontrôlée.

D'autres caractéristiques de l'invention ressortiront de la description qui va suivre, faite en regard du dessin annexé, dans lequel :
- la figure 1 est une vue en perspective du barbecue;
- la figure 2 et 3 sont des vues de profil montrant la grille placée respectivement à deux mêmes hauteurs et deux hauteurs différentes des pieds ;
- les figures 4 et 5 représentent, vus de la gauche, la demi-grille et le pied de gauche en position déployée, respectivement sur sol plat et sur sol en pente; enfin,
- la figure 6 illustre une autre manière d'utiliser les pieds.

Le barbecue représenté sur les figures, avantageusement réalisé en acier inoxydable, est essentiellement constitué :
- d'une grille de cuisson 10 formée d'une partie droite 12 et d'une partie gauche 14, respectivement appelées demi-grille de droite et demi-grille de gauche, et
- de deux pieds, l'un de droite 16, l'autre de gauche 18.

Dans la présente description, on utilisera les termes droite et gauche pour désigner des éléments qui, sur le dessin, sont respectivement à droite et à gauche, mais il s'agit là d'une convention uniquement destinée à faciliter la lecture. Par ailleurs, pour la même raison, on conviendra que la longueur du barbecue est sa dimension prise entre ses deux pieds et donc que sa largeur est l'autre dimension.

La demi-grille de gauche 14 est formée d'un cadre rectangulaire 20 à l'intérieur duquel est disposé un réseau de barres 22 parallèles à ses côtés 20a et 20b. Ces barres présentent des ondulations en phase 24 formant une pluralité de rigoles parallèles aux deux autres côtés 20c et 20d, qui servent à maintenir en place, lors de la cuisson, les aliments ayant tendance à rouler de manière incontrôlée, tels que des saucisses.

Les côtés 20c et 20d du cadre 20 se prolongent sur, typiquement, quelque 4 centimètres, à partir de son côté gauche 20a, c'est-à-dire le côté opposé à l'autre demi-grille 12, par deux portions 26 inclinées vers le bas d'un angle d'environ 45° par rapport au plan de la grille et réunies, à leur extrémité, par une barre 28 parallèle au côté 20a. On notera que cette portion de cadre comporte, en plus, à proximité de chacun des deux prolongements inclinés 26 et parallèles à eux, une barrette 30 reliant le côté 20a et la barre 28. Typiquement, la distance séparant les barrettes 30 des prolongements 26 est de quelque 2 centimètres.

La demi-grille de droite 12 est formée d'un cadre rectangulaire 32 à l'intérieur duquel est disposé un réseau de barres 34 parallèles à ses côtés 32a et 32b. Ces barres présentent les mêmes ondulations en phase 24 que le la demi-grille 10, de manière à prolonger ses rigoles.

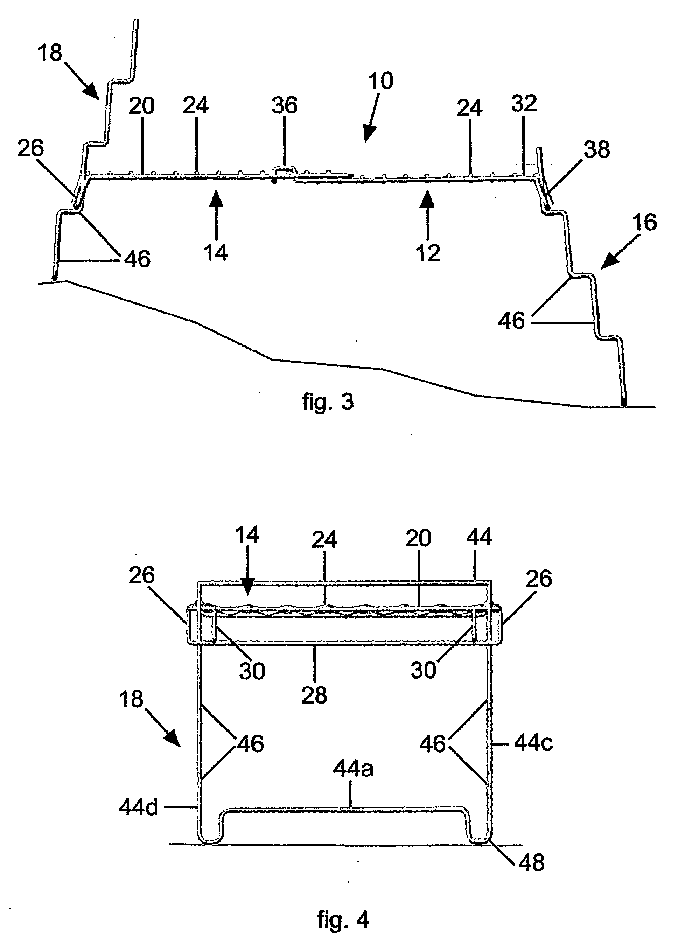

Vers la gauche, les côtés 32c et 32d de la demi-grille de droite 12 se terminent par deux crochets 36 réunis, à leur extrémité, par le côté 32a, situé un peu en dessous du plan de la demi-grille. Comme le montre la figure 4, la demi-grille 12 est légèrement moins large que la demi-grille 14, de manière à permettre aux crochets 36 de s'agripper aux barres 22.

De la même manière que pour la demi-grille de gauche 14, les côtés 32c et 32d du cadre 32 de la demi-grille de droite 12 se prolongent sur quelques centimètres, à partir de son côté droit 32b, par deux portions 38 inclinées vers le bas et réunies, à leur extrémité, par une barre 40 parallèle au côté 32b. Cette portion de cadre comporte également, à proximité de chacun des deux prolongements inclinés 38 et parallèles à eux, une barrette 42 reliant le côté 32b et la barre 40.

Le pied gauche 18 est constitué d'un cadre rectangulaire 44 dont la largeur est sensiblement à mi-chemin entre la largeur du cadre 20 et la distance séparant ses deux barrettes 30. Les côtés 44c et 44d du pied 44 traversent respectivement les fenêtres que délimitent les prolongements 26 et les barrettes 30 du cadre 20. Ces côtés sont profilés de manière à former des marches d'escalier 46, au nombre de 2 sur le dessin. Par ailleurs, le côté gauche 44a du cadre présente avantageusement un profil concave tel que seules ses deux extrémités 48 reposent sur le sol.

Le pied droit 16 est identique au pied gauche, avec la seule différence que sa largeur est légèrement plus faible puisqu'elle est sensiblement à mi-chemin entre la largeur du cadre 32 et ses deux barrettes 42. Sur le dessin, les différentes parties des deux pieds portent donc les mêmes numéro de référence.

Lorsque le barbecue n'est pas utilisé, ses deux demi-grilles 12 et 14 sont séparées l'une de l'autre et leurs pieds respectifs 16 et 18 repliés contre elles. L'appareil occupe ainsi un minimum de place.

Lorsque le barbecue doit être utilisé, la demi-grille de droite 12 est introduite dans la demi-grille de gauche 14, depuis le dessous, par son côté 32a, de manière à ce que ses deux crochets 36 prennent place sur l'une des barres 22, choisie en fonction de la longueur totale de grille désirée, qui peut être alors constituée en mettant les extrémités de deux demi-grilles au contact l'une de l'autre.

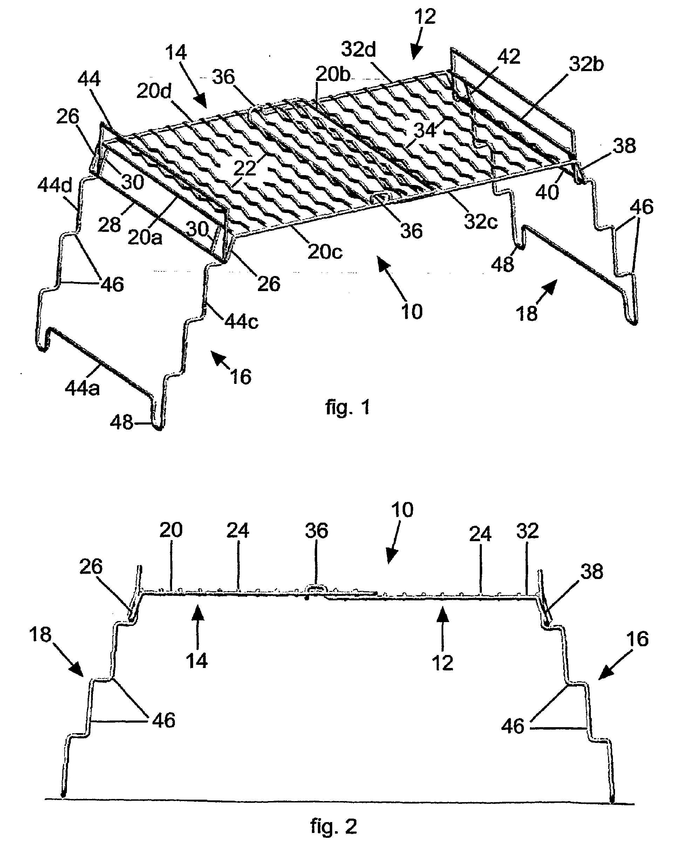

Les deux demi-grilles étant assemblées, les deux pieds 16 et 18 sont déployés et positionnés, selon la hauteur de grille désirée et le relief du sol, comme illustré par les figures 1 et 2, de manière à ce que les barres 28 et 40 reposent sur l'une des marches d'escalier 46 et que les côtés 44c et 44d des cadres prennent appui contre les côtés 20a et 32b des deux demi-grilles.

Le barbecue est alors prêt à l'usage et peut être placé sur le sol au-dessus du feu ou du gaz.

Il est intéressant de noter que les fenêtres délimitées par les prolongements 26 et 38 et par les barrettes 30 et 42 respectivement des cadres 20 et 32 sont suffisamment larges pour permettre, sur un sol non plat, comme montré à la figure 4, qu'une grille du barbecue repose sur des marches différentes de son pied.

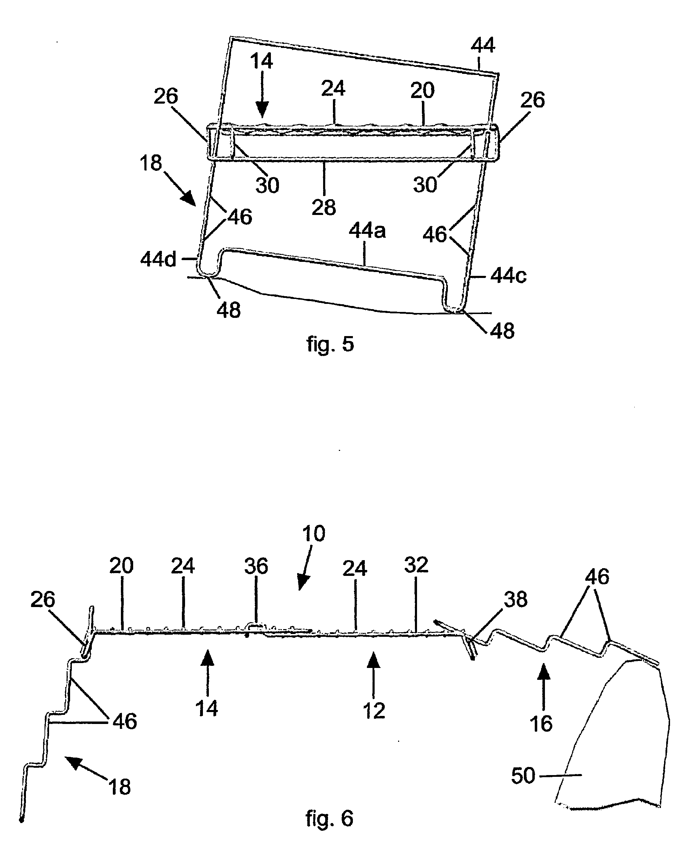

On se référera, pour terminer, à la figure 6 qui montre la manière d'utiliser le pied 18, non plus en tant que tel mais comme support de la grille 10 lorsque, par exemple, une pierre 50 permet de la placer à la hauteur désirée.

Dans ce cas, c'est le côté gauche 44a du pied gauche 18 qui est introduit, depuis le dessous, entre le côté gauche 20a et la première barre 22 de la demi-grille de gauche 14. Lorsque le pied 18, reposant sur la pierre 50, est pratiquement dans le même plan que la grille, les extrémités de ses côtés 44c et 44d sont donc serrées entre ces deux éléments. Le pied 18 sert alors à supporter la grille.

Bien entendu, il peut en être de même pour l'autre pied 16. La description de cette configuration n'est donc pas nécessaire.

Ainsi est proposé un barbecue occupant un minimum de place en position repliée, particulièrement facile à manipuler, de construction simple et robuste, de faible coût et doté d'une grille dont la surface est réglable selon les besoins, dont la hauteur est également ajustable et qui peut, quel que soit le relief du sol, être placée horizontalement.

## Revendications

1. Barbecue pliable **caractérisé en ce qu'**il comporte :
- une grille de cuisson (10) comprenant un cadre rectangulaire (20, 32) à l'intérieur duquel est disposé un réseau (22) de barres parallèles à ses deux premiers côtés (20a, 20b, 32a, 32b) et dont les deux deuxièmes côtés (20c, 20d, 32c, 32d) se prolongent, à chaque extrémité, par une partie (26, 38) inclinée vers le bas par rapport au plan de la grille, les deux parties inclinées de chaque extrémité de la grille étant réunies par une barre (28, 40) parallèle à un premier côté (20a, 32b) du cadre (20, 32), lesquels sont eux-mêmes reliés par deux barrettes (30, 42) parallèles auxdites parties inclinées et respectivement disposées à proximité de chacune, et
- deux pieds (16, 18) liés à ladite grille (10) et constitués chacun d'un cadre rectangulaire (44) dont un côté (44a) est destiné à reposer sur le sol et dont deux autres côtés opposés (44c, 44d) traversent respectivement les fenêtres que délimitent, à chaque extrémité de la grille, lesdites parties inclinées (26, 38) et lesdites barrettes (30, 42), ces côtés (44c, 44d) étant profilés de manière à former des marches d'escalier (46).

2. Barbecue selon la revendication 1, **caractérisé en ce que** ladite grille (10) est réalisée en deux demi-grilles (12, 14) liées chacune à l'un des pieds (16, 18) et pouvant être assemblées en se recouvrant plus ou moins, de manière à offrir une surface de cuisson ajustable à volonté.

3. Barbecue selon la revendication 2, **caractérisé en ce que** les deuxièmes côtés (32c, 32d) de l'une des demi-grilles (12) se terminent par deux crochets (36) dimensionnés et conformés pour s'agripper à l'une quelconque des barres (22) de l'autre demi-grille (14).

4. Barbecue selon l'une des revendications 1 à 3, **caractérisé en ce que** les barres (22, 34) de ladite grille (10) présentent des ondulations en phase (24) formant une pluralité de rigoles qui servent à maintenir en place, lors de la cuisson, les aliments ayant tendance à rouler de manière incontrôlée.

5. Barbecue selon l'une des revendications 1 à 4, **caractérisé en ce que** le côté (44a) des cadres constituant les pieds (16, 18) destiné à reposer sur le sol a un profil concave.

6. Barbecue selon l'une des revendications 1 à 5, **caractérisé en ce que** l'angle que font lesdites parties inclinées (26, 38) avec le plan de la grille est d'environ 45°.

## Claims

1. Folding barbecue, **characterized in that** it comprises:
- a cooking grill (10) comprising a rectangular surround (20, 32) in which there is arranged an array (22) of bars parallel to its two first sides (20a, 20b, 32a, 32b) and the two second sides (20c, 20d, 32c, 32d) of which are extended, at each end, by a part (26, 38) that is inclined downwards with respect to the plane of the grill, the two inclined parts at each end of the grill being connected by a bar (28, 40) parallel to a first side (20a, 32b) of the surround (20, 32), which sides are themselves connected by two short bars (30, 42) parallel to the said inclined parts and arranged respectively near to each, and
- two legs (16, 18) connected to the said grill (10) and each consisting of a rectangular surround (44) one side (44a) of which is intended to rest on the ground and two other opposite sides (44c, 44d) of which pass respectively through the windows delimited at each end of the grill by the said inclined parts (26, 38) and the said short bars (30, 42), these sides (44c, 44d) being shaped in such a way as to form the treads of a staircase (46).

2. Barbecue according to Claim 1, **characterized in that** the said grill (10) is made of two half-grills (12, 14) each connected to one of the legs (16, 18) and that can be assembled with a greater or lesser overlap so as to offer a cooking area that can be adjusted at will.

3. Barbecue according to Claim 2, **characterized in that** the second sides (32c, 32d) of one of the half grills (12) end in two hooks (36) which are shaped and sized in such a way as to grip onto any one of the bars (22) of the other half grill (14).

4. Barbecue according to one of Claims 1 to 3, **characterized in that** the bars (22, 34) of the said grill (10) have aligned corrugations (24) forming a plurality of channels which, during cooking, hold in place foodstuffs that would have a tendency to roll uncontrollably.

5. Barbecue according to one of Claims 1 to 4, **characterized in that** the side (44a) of the surrounds constituting the legs (16, 18) intended to rest on the ground has a concave profile.

6. Barbecue according to one of Claims 1 to 5, **characterized in that** the angle that the said inclined parts (26, 38) make with the plane of the grill is about 45°.

## Patentansprüche

1. Faltbarer Grill, **dadurch gekennzeichnet, dass** er folgende Elemente umfasst:
- einen Bratrost (10), der einen rechteckigen Rahmen (20, 32) umfasst, innerhalb dessen ein Gitterwerk (22) von parallel zu den beiden ersten Rahmenseiten (20a, 20b, 32a, 32b) verlaufenden Stäben angeordnet ist und dessen beiden zweiten Seiten (20c, 20d, 32c, 32d) an jedem Ende durch einen in Bezug auf die Rostebene nach unten abgewinkelten Teil (26, 38) verlängert werden, wobei die beiden abgewinkelten Teile jedes Rahmenendes durch einen parallel zur entsprechenden der beiden ersten Seiten (20a, 32b) des Rahmens (20, 32) verlaufenden Endstab (28, 40), bzw. die beiden Stäbe dieser äußersten Stabpaare (28, 20a, 40, 32b) jeweils durch zwei parallel zu den beiden entsprechenden abgewinkelten Rahmenseiten-Fortsätzen und jeweils nahe an einem von diesen verlaufende Stäbchen (30, 42) verbunden sind, und
- zwei mit dem besagten Bratrost (10) verbundene Füße (16, 18), die jeweils aus einem rechteckigen, auf der einen Seite (44a) zur Abstützung am Boden vorgesehen Rahmen (44) bestehen, dessen zwei gegenüberliegende andere Seiten (44c, 44d) jeweils die an jedem Ende des Rostes durch die besagten abgewinkelten Teile (26, 38) und die besagten Stäbchen (30, 42) umgrenzten Fenster durchstoßen, wobei diese beiden Seiten (44c, 44d) so ausgebildet sind, dass sie Treppenstufen (46) bilden.

2. Grill nach Anspruch 1, **dadurch gekennzeichnet, dass** der besagte Bratrost (10) aus zwei Halbrosten (12, 14) gebildet wird, die jeweils mit einem der Füße (16, 18) verbunden sind und so zusammengesetzt werden können, dass sie sich mehr oder weniger überlappen, um eine beliebig verstellbare Back- bzw. Bratfläche zu bieten.

3. Grill nach Anspruch 2, **dadurch gekennzeichnet, dass** die beiden zweiten Seiten (32c, 32d) eines der beiden Halbroste (12) in zwei Haken (36) enden, die so bemessen und gestaltet sind, dass sie in irgendeinen der Stäbe (22) des anderen Halbrostes (14) eingehakt werden können.

4. Grill nach einem der Ansprüche 1 bis 3, **dadurch gekennzeichnet, dass** die Stäbe (22, 34) des besagten Rostes (10) phasengleiche Wellungen (24) aufweisen, die eine Mehrzahl von Rinnen bilden, die dazu dienen, beim Backen bzw. Braten zum unkontrollierten Davonrollen neigende Lebensmittel an Ort und Stelle zu behalten.

5. Grill nach einem der Patentansprüche 1 bis 4, **dadurch gekennzeichnet, dass** die zur Abstützung am Boden vorgesehene Seite (44a) der als Füße (16, 18) dienenden Rahmen ein konkaves Profil aufweist.

6. Grill nach einem der Patentansprüche 1 bis 5, **dadurch gekennzeichnet, dass** der von den besagten abgewinkelten Teilen (26, 38) zur Rostebene gebildete Winkel ungefähr 45° beträgt.
